(19) Europäisches Patentamt
European Patent Office
Office européen des brevets

(11) **EP 3 544 272 A1**

(12) **EUROPEAN PATENT APPLICATION**

(43) Date of publication:
**25.09.2019 Bulletin 2019/39**

(51) Int Cl.:
***H04M 1/725*** *(2006.01)*

(21) Application number: **18162964.3**

(22) Date of filing: **20.03.2018**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO RS SE SI SK SM TR</b><br>Designated Extension States:<br><b>BA ME</b><br>Designated Validation States:<br><b>KH MA MD TN</b></td><td>(71) Applicant: <b>SafeDrivePod International B.V.<br>6861 EG Oosterbeek (NL)</b><br><br>(72) Inventor: <b>Damen, Erik Petrus Nicolaas<br>6861EG Oosterbeek (NL)</b><br><br>(74) Representative: <b>De Vries & Metman<br>Overschiestraat 180<br>1062 XK Amsterdam (NL)</b></td></tr>
</table>

(54) **MOBILE DEVICE USE LIMITATION SYSTEM FOR A VEHICLE**

(57) A use limitation system for a mobile device in or on a vehicle is disclosed. The use limitation system comprises a mobile device and an auxiliary device in the vehicle. The mobile device and the auxiliary device are configured to connect automatically when in short range of each other, either in wired or wireless fashion. The mobile device is, optionally, configured to run a use limitation application in background mode.

The use limitation system comprises at least one accelerometer providing at least one acceleration signal when using the vehicle. The system is configured to:
process the acceleration signal to detect a surface vibration signal caused by movement of the vehicle over a surface;
limit functionality of the mobile device by the use limitation application in the mobile device only when the surface vibration signals are detected.

**Fig. 1**

**Description**

Field of the invention

The invention relates to a mobile device use limitation system comprising a mobile device and an auxiliary device for use in a vehicle. The invention also relates to the auxiliary device for use in such a system.

Background of the invention

More and more traffic accidents occur because of drivers being distracted by mobile devices. People tend to respond immediately when a new message arrives, even though one knows that such response is dangerous. Moreover, the increasing capabilities of a smartphone and the availability of a high-bandwidth wireless connection, other features such as video streaming are possible which may form an even more dangerous distraction for a driver. Countries have regulations that prohibit the use of a smartphone during driving, but it is difficult for authorities to enforce these regulations at all times.

Mobile software applications exist that may help a driver to avoid distraction by a smartphone. Most of these applications however can be easily circumvented because it is not easy to completely lock the phone. Operating systems often do not allow a software application to control all the functions of the mobile device. For example, for security reasons, in many cases the operating system uses sandboxes that provide a restricted operating system environment for restricting access of the application to functions beyond the sandbox.

US 2017/0310816 discloses a system for tracking and monitoring mobile phone usage to deter and prevent such usage in a vehicle and for generating an audible and/or visible alarm to maintain compliance. The system comprises a device and software on the user's mobile phone to monitor the phone usage. The device uses an accelerometer to detect vibrations generated by various components of a vehicle when the vehicle is turned on. By detecting these vibrations through the accelerometer, the device knows whether the vehicle is turned on and off. The device then starts a timer and the user must activate and connect the software of the mobile phone to the device within a particular time interval. Failing to do this causes the device to generate the audible and/or visible alarm. Running the software in the background and/or terminating the connection will also cause generation of the alarm.

The prior art system is inconvenient for the user and, as a result, user compliance may be limited. The prior art system requires action of the user to connect and does not allow the user to use particular applications on the mobile device even in situations wherein usage is not or less dangerous.

Summary of the invention

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an aim of the invention to increase user compliance by providing a user-friendly use limitation system for a mobile device in a vehicle.

To that end, a use limitation system for a mobile device in or on a vehicle is disclosed. Optionally, the vehicle is motor-propelled. The use limitation system comprises a mobile device and an auxiliary device in the vehicle. The mobile device and the auxiliary device are configured to connect automatically when in short range of each other, either in wired or wireless fashion. The mobile device is, optionally, configured to run a use limitation application in background mode.

The use limitation system comprises at least one accelerometer providing at least one acceleration signal when using the vehicle. The system is configured to:

process the acceleration signal to detect a surface vibration signal caused by movement of the vehicle over a surface;
limit functionality of the mobile device by the use limitation application in the mobile device only when the surface vibration signals are detected.

Optionally, the system is configured to distinguish between motor vibration signals generated by running of the motor of the vehicle and said surface vibration signals.

The present application also claims an auxiliary device for use in the use limitation system.

One distinct aspect of this disclosure relates to a method for limiting use of a mobile device in a vehicle. The method comprises determining at least one acceleration signal. This step comprises an accelerometer repeatedly performing acceleration measurements while the vehicle is moving over a surface. The method further comprises the step of processing the acceleration signal to detect a surface vibration signal caused by movement of the vehicle over the surface. The method further comprises, based on detecting the surface vibration signal, limiting functionality of the mobile device. Limiting the functionality of the mobile device optionally comprises transmitting an instruction to the mobile device to lock the screen or to switch the mobile device into an idle mode as explained below.

The present application also pertains to an auxiliary device comprising an accelerometer, the auxiliary device comprising a processor configured to perform the steps of the methods as described herein. The present application also claims a computer program comprising instructions to cause such an auxiliary device to execute the steps of the methods described herein. The present application also pertains to a computer-readable medium having stored thereon this computer program.

The use limitation system automatically connects the mobile device to the auxiliary device in the vehicle when the user comes into the neighbourhood of the vehicle. However, only when the accelerometer detects that the vehicle is actually moving, the functionality of the mobile device is restricted. Hence, when the vehicle is started but not yet moving or when the vehicle is (nearly) at rest (e.g. in front of a traffic light), the user may use the mobile device. The applicant has found that acceleration signals as a result of surface vibrations are reliable signals for determining motion of the vehicle as opposed to acceleration signals originating from direct acceleration and deceleration of the vehicle resulting from opening the throttle resp. braking of the vehicle.

The background mode of the use limitation application enables that the mobile phone may run certain applications in foreground mode (e.g. a navigation system) even when the vehicle is moving.

Accordingly a use limitation system is obtained that is automatic and only restricts use of the mobile device in situations wherein it is potentially dangerous to use the mobile device.

It should be noted that in electrically propelled vehicles, the acceleration signal will only contain surface vibration signals that will then be detected and bring the mobile device in the limited functionality mode.

The accelerometer may be arranged in the mobile phone, in which case the auxiliary device triggers the use limitation application. In this case, advanced frequency processing may enable the mobile device to distinguish the surface vibration signals from other signals, such as motor vibration signals and/or acceleration signals from handling the mobile device.

However, in one embodiment of the invention, the auxiliary device comprises the at least one accelerometer and a processor for processing the acceleration signal and is configured to provide an input signal for the use limitation application of the mobile device. The input signal comprises the result of the processing of the acceleration signal, e.g. a signal indicating motion of the vehicle triggering the use limitation application to limit functionality of the mobile device. The auxiliary device is part of the vehicle or is arranged within the vehicle. This embodiment does not require processing signals from handling the auxiliary device (as should be done when using the accelerometer of the mobile device) and limits the amount of data to be transferred from the auxiliary device to the mobile device.

In case the use limitation application in the mobile device detects the surface vibration signal and the mobile device comprises software that prevents the use limitation application to directly lock the mobile phone, e.g. when the use limitation application is "sandboxed", this embodiment may comprise the use limitation application transmitting a code via a wireless data connection to the auxiliary device and the auxiliary device, in response, transmitting said input signal to the mobile device, said input signal comprising an instruction to limit the functionality of the mobile device.

In an embodiment, the auxiliary device is configured to limit functionality of the mobile device by transmitting an instruction to the mobile device to lock the screen or to switch the mobile device into an idle mode. The instruction may e.g. be an instruction to an operating system (OS) of the mobile device (i.e. an OS-level instruction), to lock the screen or to switch the mobile device into an idle mode. In one embodiment, the instruction to lock the mobile device, preferably to lock the screen of the mobile device or to switch the mobile device into an idle mode, is based on the Human Interface Device protocol, preferably the instructions including a code for locking the screen or switch the mobile device into an idle mode. This embodiment conveniently uses an existing protocol.

In one embodiment, the processing of the acceleration signal involves applying an amplitude threshold to detect the surface vibration signals.

In one embodiment, the auxiliary device contains its own power supply, e.g. a battery. Particularly in such cases, it is advisable that the auxiliary device is power efficient. In one embodiment, the auxiliary device samples the signal of the accelerometer at a low frequency, e.g. less than 20 Hz, such as 15 Hz or 10 Hz. Such a low sampling frequencies limits the options for frequency processing. In such cases, applying an amplitude threshold to detect the surface vibration signals is particularly advantageous. The applicant has found that the surface vibration signals contribute significantly to the total amplitude to the acceleration signal to reliably detect motion of the vehicle. In order to tune the threshold to the characteristics of the car, the system may be configured to determine the amplitude threshold on the basis of user input, e.g. by using the use limitation application.

In one embodiment, the acceleration signal comprises a plurality of acceleration values. In this embodiment, the system is configured to process the acceleration signal by determining an amplitude acceleration value based on a summation of acceleration values or derivatives thereof and to detect the surface vibration signal on the basis of a comparison between the amplitude acceleration value and the amplitude threshold. This embodiment provides a convenient method for detecting the surface vibration signals.

In one embodiment, the processing of the acceleration signal comprises a frequency processing step of the acceleration signal, or a derivative thereof, to detect the surface vibration signals. The frequency processing step may involve applying a Fourier Transform to the acceleration signal to obtain the acceleration signal in the frequency domain and then obtain frequencies from the composite acceleration signal associated with the surface vibrations. This embodiment also allows to distinguish between motor vibration signals, caused by vibration of the motor, and the surface vibration signals.

In one embodiment, the surface vibration signal may be obtained by using a frequency filter removing the motor frequency components from the composite acceleration signal. The filter may block frequencies in the range corresponding to the number of revolutions of the motor, either only in rest or in rest and during motion.

Yet another embodiment of the invention to detect the surface vibration signals in the acceleration signal pertains to a system wherein the processing of the acceleration signal comprises a peak amplitude analysis step of the acceleration signal, or a derivative thereof, comprising comparing subsequent peak amplitudes to detect the surface vibration signal. This embodiment provides an alternative approach for direct processing of the acceleration signal that avoids establishing an amplitude threshold.

In one embodiment of the invention, the auxiliary device is configured to wirelessly transmit, preferably repeatedly, one or more presence messages when the auxiliary device detects surface vibration signals and the presence message triggers the use limitation application to limit functionality of the mobile device, e.g. to lock the mobile device for preventing the user to access the mobile device.

In one embodiment of the invention, the use limitation application is configured to

repeatedly wirelessly transmit notification messages to a server in a network, the notification messages signaling the server that the use limitation application is operational in the mobile device;

monitor user interaction with the mobile device and transmitting information associated with the auxiliary device and/or the mobile device and/or the use limitation application being operational in the mobile device in the notification messages to the server; and,

receive a warning message from the server, if the server determines on the basis of the information in the notification messages an indication that the user is tampering with the mobile device.

Such embodiments are advantageous because the user may be provided direct feedback. The user can thus be immediately discouraged to continue tampering with the system.

In one embodiment of the invention, the notification messages comprise at least one of: a telephone number of the mobile device; a time stamp; an identification code, preferably a MAC address of the auxiliary device; status information of the radio; user interaction events; detected or estimated speed; status and version of the use limitation application; distance driven; type and version of the operating system; type and version of mobile device. Such information may be useful for the server for determining that a user is tampering.

The use limitation application may (be configured to) monitor user interaction with the mobile phone in response to locking the mobile device and/or while the mobile phone is locked.

Hence, the invention includes a use limitation application that is executable on a mobile device, preferably in the background of the mobile device, wherein the use limitation application is configured to detect presence messages of the auxiliary device, i.e. a device that is configured to detect an indication that the user of the mobile device is inside a vehicle.

Further, the use limitation application transmits notification messages to a server that continuously monitors the reception of the notification messages. Once, the use limitation application receives an indication, based on detecting surface vibration signals, from the auxiliary device that the vehicle is moving, the use limitation application may lock the mobile device in order to prevent the user to access the mobile device and the use limitation application may start transmitting information about an optional data connection between the auxiliary device and the mobile device and/or about the motion of the vehicle and/or about the user interaction in the notification messages to the server.

Hence, a simple low-cost solution is provided that can be used with any mobile device and that actively intervenes when the user tries to tamper the mobile device or the use limitation application running on the mobile device (e.g. terminating data connection between user detection device and mobile device, e.g. by turning off Bluetooth interface, undo lock screen, turn off app, etc.).

The mobile device may (be configured to) receive a warning message, if the server detects on the basis of the information in the notification messages that, while the vehicle is in motion, a data connection between the auxiliary device and the mobile device is terminated; and/or that the user interacts with the locked mobile device.

The mobile device may (be configured to) receive a warning message, if the server detects on the basis of the information in the notification messages that, the user has turned off the radio interface configured to wirelessly receive presence messages; and/or, the user interacts with the locked mobile device; and/or, the user has pressed the emergency button; and/or, the user has terminated the use limitation application. Such embodiments are advantageous because the user may be provided direct feedback. The user can thus be immediately discouraged to continue tampering with the system.

The use limitation application may (be configured to) be executed as a background process; and/or, wherein the data connection between the client detecting device and the mobile device is a Bluetooth radio connection.

The use limitation application may (be configured to) be executed as a background process; and/or may (be configured to) establish, when a presence message is received by the use limitation application, a data connection, preferably a Bluetooth radio connection, between the auxiliary device and the mobile device. The data connection is beneficial because a (changing) state of the connection may be indicative for tampering with the system.

The mobile device may comprise a further use limitation application repeatedly, e.g. periodically or regularly, determining the status of the use limitation application; the further use limitation application restarting the use limitation application if the status of the use limitation application indicates that the use limitation application has terminated. In an embodiment, the system comprises such further use limitation application. Such a further use limitation application may safeguard that the use limitation application is switched on.

In a further embodiment, the use limitation application may (be configured to) repeatedly, e.g. periodically and regularly, determine the status of the further use limitation application, the use limitation application restarting the further use limitation application if the status of the further use limitation application indicates that the further use limitation application is terminated. This is beneficial, because it may prevent that the further use limitation application is switched off.

In an embodiment, the use limitation application may periodically or regularly transmit notification messages to the server, the notification message comprising the identification code, preferably a MAC address, of the auxiliary device to the server, and/or an identification code of the user, preferably a telephone number or other user id. This embodiment allows for identification of a user.

In an embodiment, a notification message comprises an HTTP message, preferably an HTTP post message, the HTTP message including at least one string of parameters, the parameters defining information about data connection, the motion of the vehicle, and/or the user interaction. This embodiment conveniently uses an existing protocol.

If the user tries to tamper with the system, the use limitation application may send one or more messages to the server with information about the tampering. This way, the server may directly send a message (email, SMS or other notifications) to the user that the tampering should be stopped. Moreover, the information may be stored and will be reported on a weekly, monthly, quarterly or yearly basis to the employer, lease company, insurance company or fleet owner.

The server may (be configured to) determine tampering on the basis of one or more of the following signals:

- Bluetooth on the mobile device is turned off
- application on the mobile device is turned off or removed: the application sends a 'ping' on a regular basis to the mobile device when installed and running (in the background). If this 'ping' is not received by the server, this is considered as tampering
- the distance travelled is estimated by multiplying a total detection time of surface vibration signals, i.e. a total drive time, with an assumed average velocity, such as 60 km/h. If the distance is much lower than can be expected based on other available data, it would mean that the user has removed the auxiliary device and thus tampers with the system.

- if the user presses the home button, this is an indication that the user tries to open the mobile device. This does not work of course, because the mobile device screen is locked, but still is an indication of the attitude of the user
- if the user performs a hands free call, this is registered by the system.
- if the user is in the car and the application is connected to the user detection device, it is recorded that the user is in the car.

The invention may also relate to a computer program product comprising software code portions configured for, when run in the memory of a computer, executing the method steps according to any of process steps described above.

Further aspects of this disclosure respectively relate to a use limitation application, a mobile device, a server, a presence message and a notification message as described herein.

The invention will be further illustrated with reference to the attached drawings, which schematically will show embodiments according to the invention. It will be understood that the invention is not in any way restricted to these specific embodiments.

Brief description of the drawings

**Fig. 1** depicts a system according to an embodiment.

**Fig. 2** is a flow chart illustrating a method according to an embodiment.

**Fig. 3** shows three acceleration signals according to an embodiment as measured by an accelerometer according to an embodiment.

**Fig. 4A** illustrates the process according to one embodiment comprising generating at least one acceleration signal and subsequently processing the at least one acceleration signal.

**Fig. 4B** is a plot showing a plurality of amplitude acceleration values.

**Fig. 4C** is a plot of an acceleration signal after removal of a DC component.

**Figs. 5-8** are flow charts illustrating methods according to an embodiment.

**Fig. 9** illustrates a data processing system according to an embodiment.

Detailed description

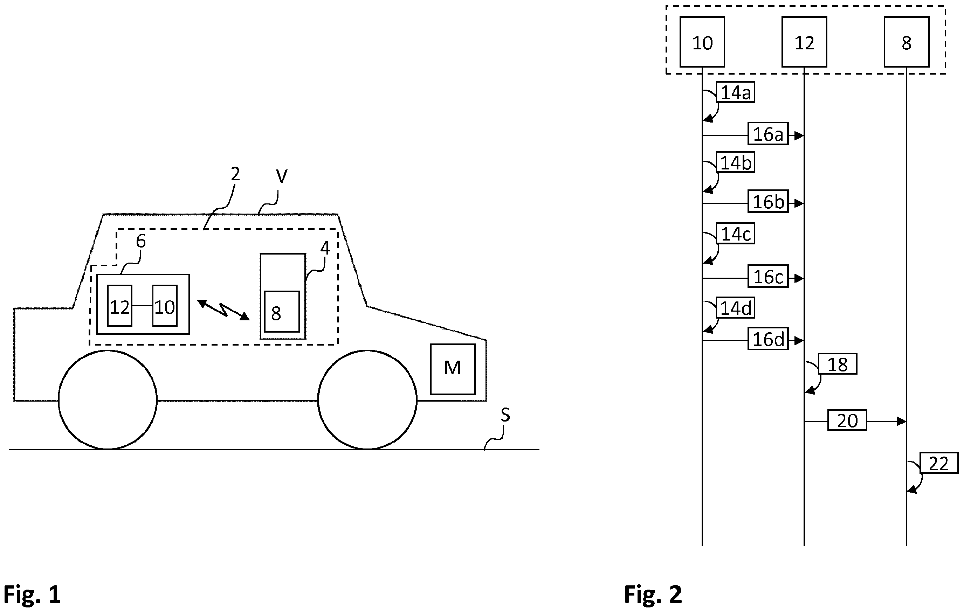

**Fig. 1** depicts a use limitation system 2 according to an embodiment of the invention. The use limitation system is at least partially present in a vehicle V that is able to move over a surface S. Preferably, the vehicle V is propelled by a motor M, such as a diesel or gasoline motor and/or an electric motor that drives at least one wheel of the vehicle V. The vehicle may be a car, bus or truck, motorcycle, et cetera. The does not need to be motor-propelled. In an example, the vehicle is a bicycle.

The system 2 comprises a mobile device 4, which may be a mobile phone, in particular a smart phone, a tablet computer, or any other device the use of which is to be limited when the vehicle V is driven by a user. The mobile device 4 may comprise a user interface, e.g. graphical user interface based on a touch screen or a voice-controlled user interface, for accessing communication functions, e.g. voice or text messaging.

The system 2 further comprises an auxiliary device 6. The mobile device 4 and auxiliary device 6 are configured to connect automatically to each other. In an example, the auxiliary device 6 is permanently or semi-permanently mounted in the vehicle and the mobile device is carried by a user and brought into the vehicle V when the user enters the vehicle. Upon the user entering the vehicle V, the mobile device 4 may automatically connect to the auxiliary device 6. To this end, the mobile device 4 and auxiliary device 6 may comprise one or more short-range data connection interfaces, e.g. a Bluetooth or NFC interface, for establishing a short-range data connection between the mobile device and the auxiliary device. In one embodiment, the mobile device 4 and the auxiliary device 6 are configured to connect on the basis of a wireless protocol, such as Bluetooth, in particular the Bluetooth Low Energy protocol known in the art.

In an embodiment, the auxiliary device is configured to repeatedly broadcast presence messages and the mobile device 4, in particular the use limitation application 8, to monitor the reception of such a presence message. Based on the reception of such a presence message, the mobile device 4 may determine that it is inside the vehicle V. Once the mobile device 4, in particular the use limitation application 8, starts receiving the presence messages, it may check whether the messages originate from an auxiliary device that is registered with the use limitation application 8. The use limitation application 8 may check whether the identifier in the presence message matches an identifier stored in the memory of the mobile device. In response to receiving a presence message, the mobile device 4 may be configured to transmit a response message back to the auxiliary device 6. To this end, the broadcast presence messages may comprise an identifier and/or address, such as a MAC address, of the auxiliary device. Hence, a connection between the mobile device 4 and auxiliary device 6 may be established in the sense that the mobile device 4 and auxiliary device 6 can exchange messages.

The mobile device 4 is configured to run a use limitation application 8, optionally in background mode. The application may be downloaded to the mobile phone. In a specific embodiment, the use limitation application 8 may be obtainable via an online application store that are known in the art. A background mode of the application may be understood to be a mode in which the application is running, i.e. program code associated with the application is being executed, without an indication of this to the user of the mobile device 4. Thus, the application may be running on the mobile device 4 without a window associated with the application appearing on a display of the mobile device 4.

In an embodiment, the use limitation application 8 may be installed in the background of the mobile device 4 such that it cannot be terminated by the user. For example, in an embodiment, when the use limitation application 8 is installed and started, the use limitation application 8 will start a helper program in the background that periodically checks whether the use limitation application 8 is still active. Similarly, the use limitation application 8 periodically checks whether the helper program is still active. This way, in case, the use limitation application 8 is terminated, the helper program restarts the use limitation application 8 and in case the helper program is terminated, the use limitation application 8 restarts the helper program.

The use limitation system 2 further comprises an accelerometer 10. Preferably, the auxiliary device 6 comprises the accelerometer 10. Alternatively, the mobile device 4 comprises the accelerometer 10. In yet another embodiment, the accelerometer 10 is a stand-alone device in the sense that neither the auxiliary device 6 and the mobile device 4 comprises the accelerometer. The accelerometer is configured to provide at least one acceleration signal when the vehicle is being used. In particular, the accelerometer 10 may be configured to generate a signal that is indicative of an acceleration in at least one direction. In one example, the accelerometer 10 may be configured to measure respective acceleration components in a plurality of directions. Then, the accelerometer may generate a respective signal for each measured acceleration component. To illustrate, the accelerometer may be configured to measure three acceleration components, one component in an x-direction, one component in a y-direction and one component in z-direction, which may be perpendicular directions. The accelerometer may then simultaneously generate a first, second and third signal, wherein the first signal is indicative of the acceleration component in the x-direction, the second signal is indicative of the acceleration component in the y-direction and the third signal is indicative of the acceleration component in the z-direction.

The system 2, preferably a processor 12 of the system, is configured to process the at least one acceleration signal provided by the accelerometer. The mobile device 4 may comprise processor 12 (not shown). Preferably, the auxiliary device 6 comprises the processor 12 so that, in case the auxiliary device 6 also comprises the accelerometer 10, it is not necessary to continuously transmit the at least one acceleration signal to the mobile device 4 for processing.

The system 2 is configured to process the at least one acceleration signal in order to detect a surface vibration signal caused by a movement of the vehicle over the surface S. The at least one acceleration signal may or may not comprise a surface vibration signal depending on whether the vehicle V is moving over a surface S or not. When the vehicle is moving over a surface, the interaction between the vehicle and the surface typically cause the vehicle to vibrate to some extent, especially if the surface is not smooth, and these vibrations naturally contribute to the acceleration that is measured by the accelerometer. The surface vibration signal may be understood to comprise acceleration values that are indicative of respective accelerations that are caused by movement of the vehicle over the surface.

The system 2, preferably the processor 12, is configured to limit functionality of the mobile device 4 by the use limitation application in the mobile device 4 only when the surface vibration signals are detected. Limiting the functionality of the mobile device 4 may comprise disabling one or more functionalities of the mobile device 4. In a particular example, limiting the functionality comprises locking the mobile device 4, e.g. by locking the screen or by turning the mobile device in a sleep mode, so that the user is not able to access functions of the mobile device, in particular communication functions, of the mobile device that may distract the driver.

As will be understood, preferably, the acceleration sensor measures the acceleration at high frequency and processes the resulting acceleration signal without delay in order to detect surface vibration signals so that once a vehicle is moving, the surface vibration signals are detected fast and the functionality of the mobile device 4 may be limited fast. In a similar manner, such high-frequency measuring and expeditious signal processing allow to quickly release the functionality of the mobile device 4 once the vehicle V has stopped moving over the surface S.

Fig. 2 is a flow chart illustrating a method according to an embodiment. The flow chart illustrates steps that are performed by the accelerometer 10, the processor 12 and use limitation application 8. It should be appreciated that this method is executed while a vehicle comprising these components is moving over a surface.

Steps 14a, 14b, 14c and 14d each comprise the accelerometer 10 performing an acceleration measurement. Each acceleration measurement may yield at least one acceleration value that is indicative of acceleration in at least one direction. In one embodiment, each measurement yields three acceleration values indicative of three respective accelerations in three directions. By performing these steps 14a-14d, the accelerometer determines at least one acceleration signal. The at least one acceleration signal may namely consist of a plurality of acceleration values. Since the vehicle is moving over the surface, the acceleration signal comprises contributions from surface vibrations.

The system 2, in particular the accelerometer 10, in steps 14a-14d may be understood to sample the acceleration in order to provide the at least one acceleration signal. The sampling preferably occurs at low frequency, such as less than 20 Hz, preferably less than 15 Hz, more preferably less than 10 Hz in order to reduce the amount of power that is consumed by the accelerometer when providing the acceleration signal.

Steps 16a, 16b, 16c and 16d illustrate the accelerometer transmitting the results, i.e. one or more obtained acceleration values, for the respective measurements 14a, 14b, 14c and 14d to processor 12. The processor 12 may store the received acceleration values in a data storage. The acceleration values may be understood to constitute one or more acceleration signals.

Alternatively, (not shown) the accelerometer may store acceleration values obtained with a plurality of measurements and transmit the obtained values after it has performed at least two measurements. In an example, the accelerometer stores the acceleration values obtained with measurements 14a, 14b, 14c and 14d in a local data storage and transmits, after having performed measurement 14d, the obtained acceleration values to processor 12.

Step 18 comprises processing the acceleration signal to detect a surface vibration signal. Based on this detection, the method comprises limiting the functionality of the mobile device 4 (depicted in step 20 and 22). In one embodiment, the the functionality of the mobile device is limited by the use limitation application in the mobile device only when the surface vibration signals are detected.

In the particular embodiment shown in Fig. 2, this last step is caused by the processor 12 transmitting an input signal 20 to the mobile device 4, in particular to the use limitation application 8, to limit the functionality of the mobile device 4. The processor 12 may be configured as a Bluetooth module wherein the data connection between the mobile device 4, in particular the use limitation application 8, and the processor 12 is based on a Bluetooth low energy (LE) protocol. This protocol allows communication between devices/modules on the basis of profiles, wherein the Human Interface Device standard profile may be used to send a code, a key combination, to the mobile device 4, in particular to the use limitation application 8, which will lock the screen of the mobile device 4.

Additionally or alternatively, the system 2 may be configured to limit the functionality of the mobile device 4 by, in response to receiving input signal 20, executing the use limitation application 8 as a foreground process. The use limitation application as a foreground process may be configured so that the mobile device is locked, i.e. the user cannot access the user functions, as long as the client application is a foreground process.

In one embodiment, the system 2 may be configured to limit the functionality of the mobile device 4 by the use limitation application 8, in response to receiving input signal 20, rendering a graphical overlay on top of the Graphical User Interface (GUI) of the mobile device. In an embodiment, the graphical overlay does not comprise functional areas that allow a user to interact with the GUI. This way, a user is prevented from interacting with the mobile device 4, e.g. to interact with applications running behind the graphical overlay. The graphical overlay may be presented even if the use limitation application runs in the background, for example because the user has pressed a "home button" of the mobile device. The graphical overlay prevents a user to access applications that are "behind" the graphical overlay. Hence, even if the use limitation application is running in the background, the user may still not be able to see other applications or notifications on the mobile device 4.

The graphical overlay may be configured such that a user is not able at all to interact with the graphical overlay, for example such that the overlay does not accept any input from a touch screen. Alternatively, the graphical overlay comprises an area with which a user indeed is able to interact. In an example the area is an emergency button in the overlay. A user interaction with this area on the display may result in the mobile device unlocking. This enables that a user, in case of an emergency, is able to unlock and use the mobile device 4.

In one embodiment, the use limitation application may limit the functionality in response to reading a custom service in the Bluetooth Low Energy profile of the device. In one embodiment, the Bluetooth Low Energy profile may contain a service that contains the last value of the outcome of the analysis of the at least one acceleration signal, i.e., whether a surface vibration signal has been detected or not, i.e. whether the vehicle is moving or not, so that the use limitation application may read out this Bluetooth Low Energy profile service and use that information to limit the functionality of the device.

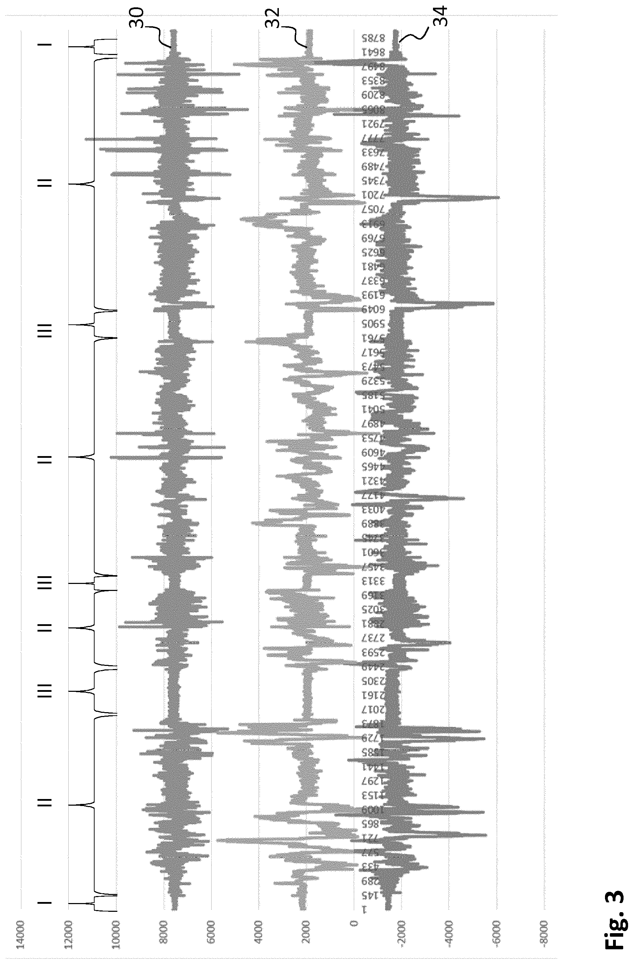

**Fig. 3** shows three acceleration signals as provided by the accelerometer in a vehicle, one signal 30 for the y-direction, a signal 32 for the z-direction and a signal 34 for the z-direction. The horizontal axis of the graph depicts time and the vertical axis indicates measured acceleration. Indicated are three types of regions, type I, type II and type III. Region type I contains acceleration values that were measured when the vehicle is standing still with the motor shut off. Region type II contains acceleration values measured when the vehicle's motor was active and the vehicle was moving over a surface. The three acceleration signals in regions II thus comprise surface vibration signals caused by movement of the vehicle over the surface. Region type III contains acceleration values measured when the vehicle's motor was active but the vehicle is not moving over a surface. Such a situation for example occurs when the vehicle is standing still in front of a traffic light.

The processor is configured to process these acceleration signals in order to distinguish at least regions of type II in the signal, in other words, to detect the surface vibration signals in the acceleration signals.

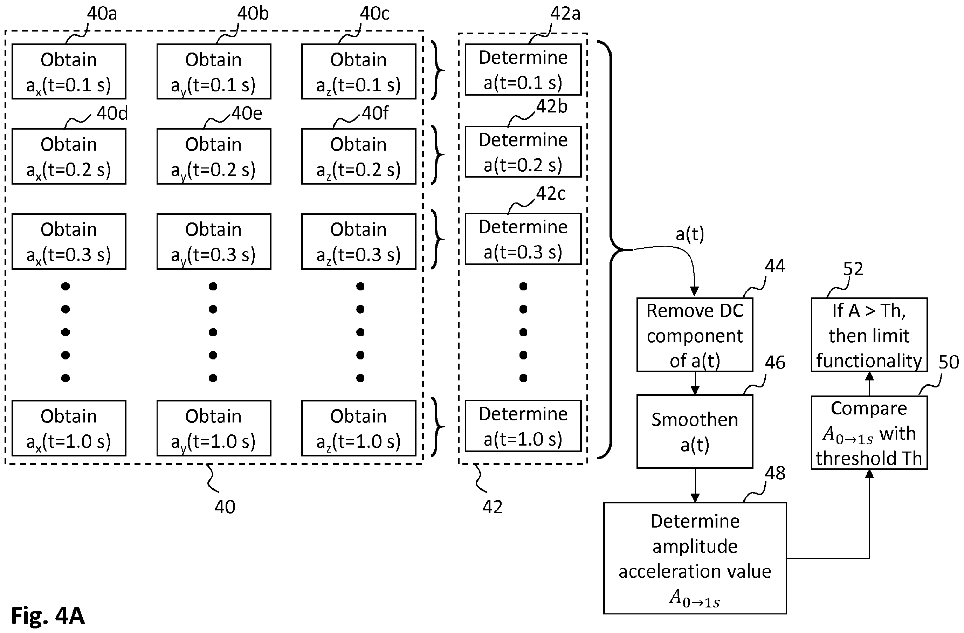

**Fig. 4A** shows a method for processing an acceleration signal in accordance with an embodiment. Although Fig. 3 illustrates how three acceleration signals provided by the accelerometer may be processed, the same principles apply when the accelerometer provides one acceleration signal.

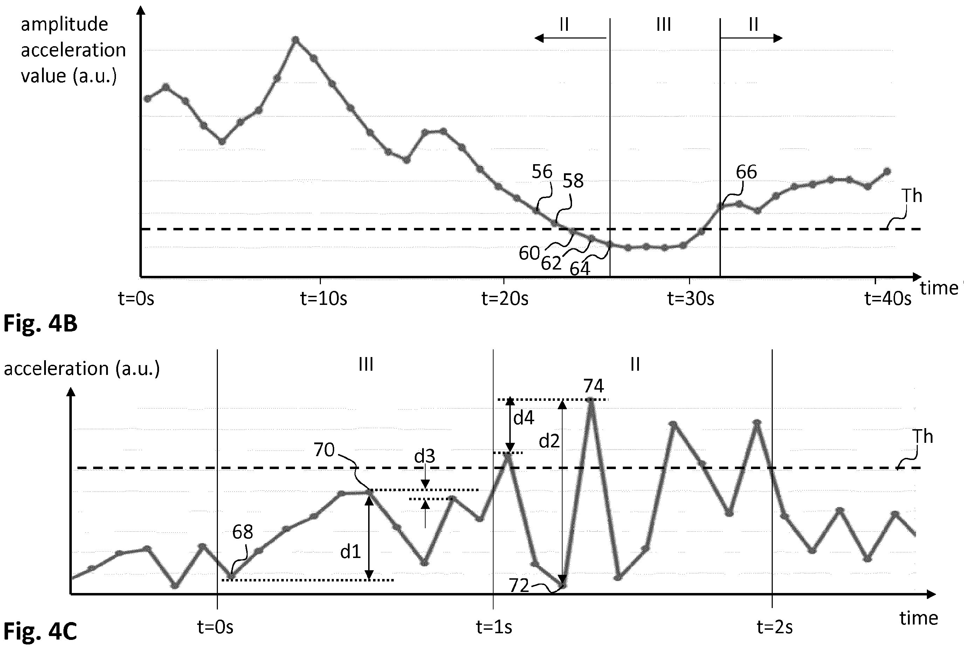

Each block in Fig. 4 illustrates a method step. The steps in block 40 are preferably performed by the accelerometer. In this example, the accelerometer is configured to measure acceleration in three substantially perpendicular directions x, y and z.

Furthermore, in this embodiment, the accelerometer is configured to sample the acceleration at a low frequency, in particular at 10 Hz. However, any frequency equal to or below 20 Hz, such as 15 Hz, 5 Hz may be understood to be a low frequency. Accordingly, at a particular time t=0.1 seconds, the accelerometer performs steps 40a, 40b and 40c. Step 40a comprises obtaining an acceleration value that is indicative of acceleration in the x-direction at t=0.1 seconds. Step 40b comprises obtaining an acceleration value indicative of acceleration in the y-direction at t=0.1 seconds. Step 40c comprises obtaining an acceleration value indicative of acceleration in the z-direction at t=0.1 seconds. Then, at time t=0.2 seconds, with steps 40d, 40e and 40f, respective acceleration values for the x-, y- and z-direction are obtained. The obtained acceleration values may be stored in a data storage, for example a data storage of the auxiliary device. Since in general an acceleration signal may be understood to be a set of acceleration values respectively associated with time instances, the steps in block 40 may be understood to yield three acceleration signals, namely $a_x(t)$, $a_y(t)$ $a_z(t)$, at least one of which, e.g. all, comprises a surface vibration signal that is caused by movement of the vehicle over a surface.

The method steps in block 42 illustrate determining a further acceleration signal a(t) on the basis of $a_x(t)$, $a_y(t)$ $a_z(t)$. Step 42a illustrates determining a(t=0.1), step 42b determining a(t=0.2), step 42c determining a(t=0.3). In this example, step 42a comprises determining a(t=0.1) on the basis of $a_x(t=0.1)$, $a_y(t=0.1)$ $a_z(t=0.1)$, in particular, determining a(t=0.1) may be calculated as:

$$a(t = 0.1s) = \sqrt{(a_x(t = 0.1s))^2 + (a_y(t = 0.1s))^2 + (a_z(t = 0.1s))^2}.$$

The other steps in block 42 may comprise determining a value for the further acceleration signal a(t) in a similar manner. In general, for any particular time t, the value for the further acceleration signal may thus be determined by:

$$a(t) = \sqrt{(a_x(t))^2 + (a_y(t))^2 + (a_z(t))^2}.$$

Then, once the further acceleration signal has been determined, optionally, the embodiment comprises a step 44 of removing a DC component of the further acceleration signal a(t), which may be performed by applying at least one signal processing filter. In a particular embodiment, a first order high pass recursive filter is applied to this end. With the removal of the DC component, a contribution of the earth's gravity to the further acceleration signal a(t) is reduced and preferably substantially removed.

The embodiment further comprises an optional step 46 of smoothening the further acceleration signal a(t) over a particular period of time, preferably approximately three seconds. This smoothening step comprises determining a moving average. The further acceleration signal a(t) is a discrete-time signal consisting of acceleration value $a_n$ for respective time instances. The table below shows how a smoothened acceleration signal $a_{smooth}$ may be calculated based on a(t).

| a(t) | $a_{smooth}$ (t) |
|---|---|
| $a_n$ | $a_{smooth,n}$ |
| $a_{n+1}$ | $a_{smooth,n+1} = \dfrac{a_{smooth,n} * (N - 1) + a_{n+1}}{N}$ |
| $a_{n+2}$ | $a_{smooth,n+2} = \dfrac{a_{smooth,n+1} * (N - 1) + a_{n+2}}{N}$ |
| $a_{n+3}$ | $a_{smooth,n+3} = \dfrac{a_{smooth,n+2} * (N - 1) + a_{n+3}}{N}$ |
| $a_{n+4}$ | $a_{smooth,n+4} = \dfrac{a_{smooth,n+3} * (N - 1) + a_{n+4}}{N}$ |
| $a_{n+5}$ | $a_{smooth,n+5} = \dfrac{a_{smooth,n+4} * (N - 1) + a_{n+5}}{N}$ |
| $a_{n+6}$ | $a_{smooth,n+6} = \dfrac{a_{smooth,n+5} * (N - 1) + a_{n+6}}{N}$ |

Herein, N denotes the number of values over which an average is calculated and thus denotes the period of time over which the signal is smoothened.

Thus, smoothening an acceleration signal may comprise, for each particular acceleration value in the acceleration signal, determining an average value of a set of acceleration values comprising the particular acceleration value and a predefined number of acceleration values preceding the particular acceleration value.

Then, the embodiment comprises in step 48 determining an amplitude acceleration value A based on a summation of acceleration values or derivatives thereof. In particular, a predefined number of most recently obtained acceleration values may be summed. In one particular embodiment, the amplitude acceleration value is calculated by:

$$A_{0 \to 1s} = \sum_{n=1}^{10} a(t = 0.1n).$$

The subscript "0 -> Is" indicates that the amplitude acceleration value is associated with the period [t=0 seconds ; t=1 second]. It should be appreciated that the above formula denotes that the further acceleration signal a(t) is summed, however, if step 46 has been performed, the smoothened acceleration signal $a_{smooth}$ is summed.

Step 50 comprises a comparison between the amplitude acceleration value and an amplitude threshold Th. In general, the amplitude acceleration value may be understood to be indicative of a change of acceleration during a particular time period.

Step 50 comprises detecting a surface vibration signal. In this particular embodiment, detecting the surface vibration comprises determining that the amplitude acceleration value A is higher than an amplitude threshold Th. The amplitude threshold Th may be preselected. The amplitude threshold Th may be predetermined. The applicant has found that appropriately selecting the amplitude threshold enables to detect the surface vibration signal, even when the vehicle is moving over a relatively smooth surface such as over a motor highway. Selecting a suitable amplitude threshold may comprise testing a variety of thresholds for a plurality of vehicles for different circumstances. Then the amplitude threshold may be selected based on which the system best determines whether the vehicle is moving or not, i.e. based on which the system best detects the surface vibration signals. Of course, one amplitude threshold is selected based on which a surface vibration signal can be always detected, irrespective of the vehicle type and irrespective of the surface over which the vehicle is moving.

Step 52 comprises, on the basis of detecting the surface vibration signal in step 50, limiting functionality of the mobile device, which may be performed as described herein. The functionality of the mobile device may be limited only when the system detects surface vibration signals.

Fig. 4A depicts that the amplitude acceleration value is determined for a period of one second. Hence, one amplitude acceleration value may be determined every second. However, the amplitude acceleration value may be determined for periods having other lengths as well, such as periods of a quarter second, halve second, two seconds, three seconds, five seconds, ten seconds, et cetera. Further, in one embodiment, two amplitude acceleration values may be determined for two time periods that may even overlap. To illustrate, the system may be configured to determine an amplitude acceleration value every 0.1 second, wherein each amplitude acceleration value is determined by summing a number of acceleration values most recently obtained, e.g. the ten most recently obtained acceleration values. As will be understood, each determined amplitude acceleration value may be compared to the amplitude threshold value Th, which may cause the functionality of the mobile device to be limited.

In one embodiment (not shown in Fig. 4A), the processing of the acceleration signal comprises a frequency processing step of the acceleration signal, or a derivative thereof, to detect the surface vibration signals. Optionally the frequency processing step comprises applying a frequency filter, such as a frequency high-pass filter, band-pass filter or low-pass filter, in order to detect the surface vibration signals. In one particular example, such a frequency filter may be employed to distinguish accelerations caused by a motor that is running from accelerations caused by the vehicle moving over a surface. The accelerations caused by a running motor may namely be associated with a first frequency band, e.g. in the sense that these accelerations predominantly comprise frequencies in the this first frequency band. Similarly, the accelerations caused by the vehicle moving over the surface may be associated with a second frequency band, different from the first frequency band. The second frequency band may be higher or lower than the first frequency band. By filtering out from the at least one acceleration signal frequencies that are associated with vibrations of the motor an acceleration signal may be obtained having acceleration values that are associated with the vehicle moving over a surface, based on which the surface vibration signal may be detected. Detecting the surface vibration signal on the basis of such a frequency filtered signal may comprise determining whether a measure for the amplitude of the frequency filtered signal exceeds a certain threshold value. Since the at least one acceleration signal may comprise (weak) frequency components in the second frequency band even if the vehicle is not moving over a surface, comparing a strength and/or amplitude of the frequency filtered signal prevents that the system falsely determines that the vehicle is moving.

**Fig. 4B** is a plot showing amplitude acceleration values as determined by the use limitation system in one embodiment. In this embodiment, the system determines an amplitude acceleration value every second based on ten acceleration values of an acceleration signal that is the result of step 46 in Fig. 4A. Note that in this embodiment, the accelerometer is configured to sample acceleration at 10 Hz.

In one embodiment, the functionality of the mobile device is limited based on a plurality of subsequent comparisons of determined amplitude acceleration values and amplitude threshold. One embodiment may comprise determining a first amplitude acceleration value based on a first summation of a first set of acceleration values or derivatives thereof and comparing the first amplitude acceleration value with the amplitude threshold, determining a second amplitude acceleration value based on a second summation of a second set of acceleration values or derivatives thereof, the second set being different from the first set, and comparing the second amplitude acceleration value with the amplitude threshold. This embodiment then comprises detecting the surface vibration signal on the basis of said two comparisons. In particular, in this embodiment, the surface vibration signal may be detected if at least one of a number, e.g. two, three, four or five, of subsequently determined amplitude acceleration values exceeds the amplitude threshold. In a specific example, if one of three subsequently determined amplitude acceleration values exceeds the amplitude threshold, the system will detect the surface vibration signal and in response limit the functionality of the mobile device. This embodiment further prevents falsely detecting a surface vibration signal. To illustrate, in Fig. 4B amplitude acceleration values 60, 62 and 64 all lie below the amplitude threshold Th. However, out of values 56, 58 and 60 at least one, namely 56, lies above the amplitude threshold. Therefore, when amplitude acceleration value 60 is determined, the surface vibration signal is still detected by the system. For value 62 also holds that at least one out of values 58, 60 and 62 lies above the threshold. Therefore, at value 62, the surface vibration signal is still detected. For value 64 the most recent three values, namely 60, 62 and 64 all lie below the threshold, therefore the surface vibration signal is no longer detected.

Amplitude acceleration value 66 lies above the threshold, therefore the surface vibration signal is detected when value 66 is determined.

**FIG. 4C** illustrates a number of ways to determine an amplitude acceleration value for a particular period. In this example, the graph shows an acceleration signal that may be the result of step 44 described with reference to Fig. 4A. In this example, the graph shows the absolute acceleration values of the acceleration signal as dots. It should be appreciated that the principles for determining an amplitude acceleration values described below may also be applied to other acceleration signals, for example raw signals as directly measured by the accelerometer (depicted in Fig. 3).

Alternative to the definition of the amplitude acceleration value employed in the embodiment of Fig. 4A, other definitions may be used that are indicative of a change of the acceleration during a particular time period. The amplitude acceleration value may for example be determined on the basis of a root mean square amplitude $A_{RMS}$ defined as the square root of the mean over the particular time period of the square of the acceleration values:

$$A_{RMS} = \sqrt{\frac{1}{n}(a_1^2 + a_2^2 + a_3^2 + \cdots + a_n^2)},$$

wherein $a_1, ..., a_n$, are acceleration values determined for different time instances.

In another embodiment, the amplitude acceleration value may be determined on the basis of a peak-to-peak amplitude, which relates to a difference between the highest peak and lowest trough in said particular time period for which the amplitude acceleration value indicates a change of acceleration value. Fig. 4C shows that for the period from 0 to 1 second, the difference between the highest peak and lowest trough is difference d1 between value 68 and value 70. This difference d1 may then be compared to a threshold amplitude in order to detect the surface vibration signal. Note that difference d2 in period 1 to 2 seconds is much larger.

In another embodiment, the amplitude acceleration value may be based on, optionally defined as, the highest measured acceleration value occurring during said particular time period. This relatively straightforward embodiment may be employed on any acceleration signal, e.g. as depicted in Fig. 3. The highest measured acceleration in Fig. 4C for the period 0 to 1 second is value 70. As this is below the threshold value indicated by the dashed line Th, surface vibration signals are not detected. The highest value for the period from 1 to 2 seconds is value 74, which lies above the threshold Th. Hence, surface vibration signals are detected.

In one embodiment, the processing of the acceleration signal comprises a peak amplitude analysis step of the acceleration signal, or a derivative thereof, comprising comparing subsequent peak amplitudes to detect the surface vibration signal. The acceleration signal, within a time period, may comprise a number of subsequent local maxima, i.e. subsequent local maximum acceleration values. This embodiment may comprise monitoring a difference between the subsequent local maximum acceleration values. As can be seen in Fig. 4C, the local maximum acceleration values during period 0 to 1 second are almost equal (note the small difference d3). However, at least one difference between local maxima in period from 1 to 2 seconds, namely difference d4, is larger, which may be indicative of surface vibration signals. Based on such peak amplitude analysis, the system may be configured to detect the surface vibration signal.

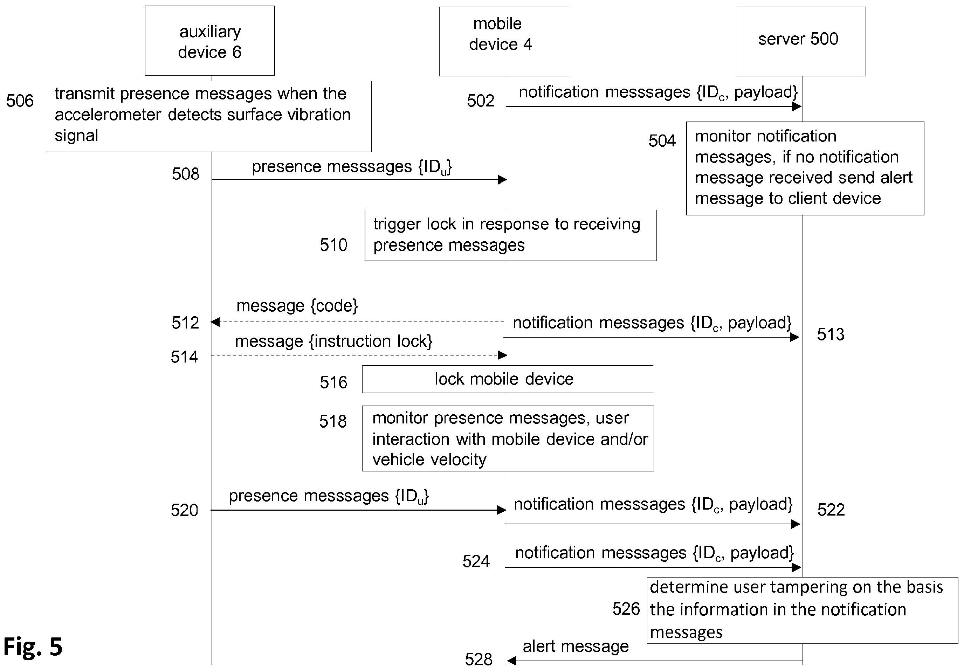

**Fig. 5** is a flow chart illustrating a method according to an embodiment. The process may be executed by a system as described with reference to Fig. 1. Here, the auxiliary device 6 is configured to wirelessly transmit, preferably repeatedly, one or more presence messages when the auxiliary device detects surface vibration signals (steps 506 and 508) and the presence message triggers the use limitation application in the mobile device 4 to limit functionality of the mobile device 4 (steps 510, 512, 514, 516), e.g. by locking the mobile device for preventing the user to access the mobile device, in particular by locking the user interface, e.g. the graphical user interface and/or voice control user interface (step 216), or e.g. the entire screen. The presence messages may be transmitted over a short-range data connection based on e.g. Bluetooth or Bluetooth Low Energy (LE).

In an embodiment, if presence messages are received by the use limitation application, it may check whether the device identifier in the presence messages, e.g. the MAC address of the auxiliary device, matches a device identifier that was registered with the use limitation application. Hence, the auxiliary device may be registered with the use limitation application so that the use limitation application can check if the presence messages received by the mobile device 4 originate from the auxiliary device of the user of the mobile device 4.

In some embodiments, the Operating System (OS) of the mobile device 4 may not allow a use limitation application to disable or lock the user interface (UI) of the mobile device 4. In that case, the auxiliary device 6 may be configured as a Bluetooth module wherein the data connection between the use limitation application and the auxiliary device is based on a Bluetooth low energy (LE) protocol. This protocol allows communication between devices on the basis of profiles, wherein the Human Interface Device standard profile may be used to send a code, a key combination, to the mobile device 4 which will lock the screen of the mobile device. Hence, in this embodiment, the use limitation application may trigger transmission of a message over the Bluetooth interface of the mobile device to the user detecting device (step 512). The message may comprise a code that triggers the auxiliary device to send a message, e.g. a HID profile code, comprising a code for instructing the mobile device to lock its screen (step 514). This way, the mobile device 4 may be locked even if the operation system does not allow the use limitation application to directly block the user from accessing functions of the mobile device 4.

In the depicted embodiment, the mobile device 4 repeatedly wirelessly transmits (step 502, 513, 522, 524) notification messages to a server 500 in a network. The notification messages signal the server 500 that the use limitation application is operational in the mobile device. Furthermore, the mobile device 4 is configured to monitor user interaction with the mobile device and transmit information associated with the auxiliary device and/or the mobile device and/or the use limitation application being operational in the mobile device in the notification messages to the server 500. Furthermore, the mobile device 4 receives a warning message from the server 500 (step 528), if the server 500 determines (step 526) on the basis of the information in the notification messages an indication that the user is tampering with the mobile device 500. Preferably, the notification messages comprise a mobile device identifier and information about the status of certain functions of the mobile device 500, e.g. a location service and/or short-range data connection interfaces such as a Bluetooth interface.

Upon installing the use limitation application on the mobile device 500, the use limitation application and mobile device 500 are registered with the server so that the server knows that a use limitation application that is transmitting notification messages should be running in the background of the registered mobile device 4. The server application may monitor the notification messages and the information therein (step 504) and if the server 500 does not receive notification messages of the registered mobile device 4 within a predetermined period, the server application may send an alert message to the mobile device informing the user of the mobile device to undo the tampering, e.g. restart the client application or turn on the short-distance data connection interface, e.g. the Bluetooth interface of the mobile device.

Meanwhile, the use limitation application may continue to send notification messages to the server in order to notify the server application that the use limitation application is running (step 513). Once the mobile device 4 has been locked, the use limitation application may monitor information (step 518) associated with the user detecting device (e.g. reception of presence messages 220, time stamp of the presence messages), user interaction with the client application (e.g. interaction with the touch screen or a hands-free user interface, e.g. a voice-controlled user interface), the speed and/or location of the vehicle, status information on the client application (e.g. running in the background or foreground), status information of the mobile device (e.g. GPS module and/or Bluetooth interface on or off), etc.

During the monitoring process, the monitored information may be sent periodically or regularly in notification messages (steps 522 and 524) to the server 500, which may store the monitored information and determine on the basis of this information whether the user tampers with the use limitation application or the mobile device 4 that runs the use limitation application. If the server 500 detects tampering on the basis of the information in the notification messages (step 526), it may send an alert message, e.g. a text message or an email, to the user (step 528).

Further, if agreed with the employer or insurance company or the like, a message may also be sent to the employer or insurance company etc. Further, a weekly, monthly or quarterly report is produced by the system, that informs the employer or insurance company etc. on the tampering behaviour of the employees. Based on this report the employer or insurance company etc. can take actions against the employee, e.g. increase of the insurance premium, increase of the own risk, etc.

The notification message transmitted by the use limitation application may be configured as an HTTP message, e.g. an HTTP POST message, which may be sent to the server which can be addressed by the use limitation application on the basis of an URL. The notification messages may be related to regular data logging, including information on time, distance, velocity, etc. In addition, a notification message may be sent in case the use limitation application determines information that could be interpreted as a tampering event, e.g. the data connection between the

In an embodiment, a notification message may comprise a string of parameters, preferably a string of parameters according to the JSON protocol. In the JSON string one or more of the following parameters may be inserted: telephone_number, timestamp, MAC address of user detecting device, status user detecting device, battery, event, maximum_speed in last time interval, app_foreground, app version, emergency button pressed, distance, os version, phone type. An example of such JSON string is provided hereunder:

{"BLE_MAC":"8C:8B:83:42:9E:C8","BLE_name":"Car 1","BLE_status":"BLE turned on","Distance":"158729","Emergency":"n/a","Event":"Moving","Max_speed":"66.7","Telephone_number":"+31612345678","app_foreground":"false","app_version":"0.5(30)","os_version":"Android 6.0.1","phone_type":"Samsung","timestamp":"2016-12-10T10:23:51+01:00"}

Hence, a notification comprising such string may signal the sever that at 2016-12-10T10:23:51+01:00 an auxiliary device, in this case a Bluetooth Low Energy (BLE) device, is connected to a mobile device 4 of a user of a vehicle, in this case a Samsung smartphone running on Android 6.0.1. and telephone number +31612345678, which has a use limitation application running in the background wherein the application is configured to connect to the auxiliary device and to determine if the vehicle is moving.

The information in the notification messages may be stored by the server and stored in a database. In an embodiment, the server application may determine tampering on the basis of the Event parameter, wherein an Event may include user detecting device turned on or turned off, vehicle not moving or moving, start app or terminate app, start call, stop call, etc.

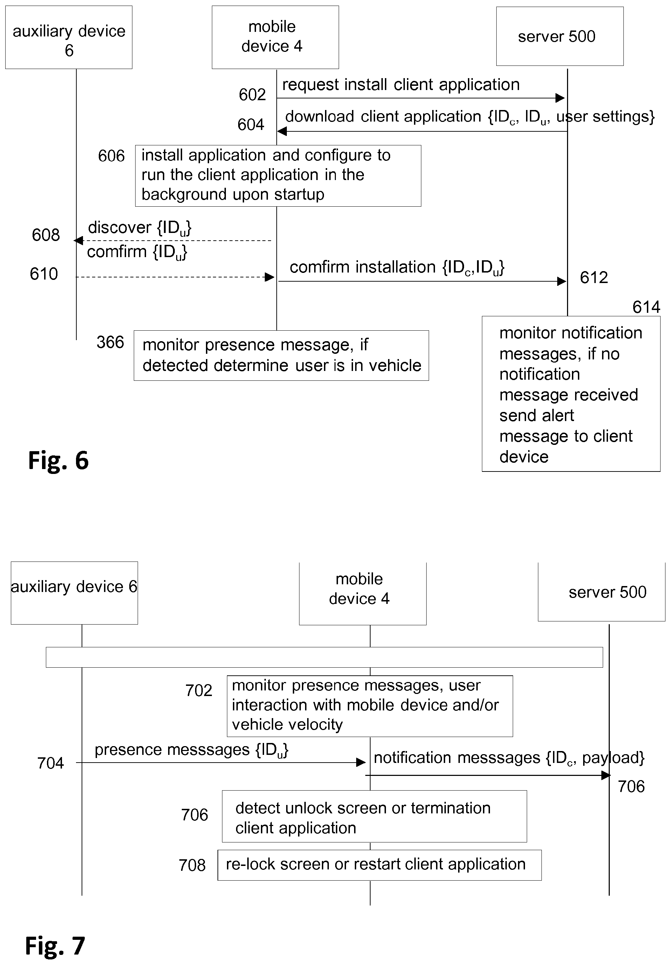

**Fig. 6** illustrates a flow chart of a method according to another embodiment of the invention. In particular, Fig. 6 depicts part of a method of installing a use limitation application on a mobile device 4 and registering the use limitation application with the server. The method may include the mobile device requesting to install a use limitation application for limiting functionality of a mobile device when it is in a moving vehicle (step 602). In response, the mobile device may receive (download) code for installing the use limitation application on the mobile device. The installed use limitation application may be identified by an identifier IDc. Optionally, the installation information may include an auxiliary device 6 identifier IDu and/or user settings information. For example, the user setting information may configure the use limitation application to allow certain functions, e.g. hands-free calls, during driving while locking the mobile device for all other functions.

When installing, the use limitation application may be configured to run in the background of the mobile device. Further, the use limitation application may be started each time when the mobile device is rebooted (step 606). Optionally, as part of the installation, the mobile device may also initiate a discovery procedure for registering the auxiliary device 6 with the use limitation application (step 608). In an embodiment, the discovery procedure may include transmitting messages comprising an identifier of an auxiliary device 6. If the discovery message is received by an auxiliary device 6 identified by the identifier in the discovery message, then the auxiliary device 6 may send a confirmation message to the use limitation application (step 610). Thereafter, when the use limitation application is successfully installed, a confirmation message comprising identification information associated with the use limitation application and, optionally, the auxiliary device 6 may be sent to the server (step 612). The server application may then start monitoring for notification message (step 614) and the use limitation application may start monitoring presence devices (step 616) in a similar way as described with reference to Fig. 5.

**Fig. 7** illustrates a flow chart of a method according to further embodiment of the invention. In particular, Fig. 7 depicts part of a method wherein the use limitation application as described above is monitoring information (step 702) associated with the auxiliary device 6 (e.g. presence messages transmitted by the auxiliary device 6 704), the mobile device (status Bluetooth interface, GPS module, user interaction etc.), the use limitation application (terminated, running in the foreground or background) and the vehicle (e.g. speed and location). Further, the use limitation application is transmitting notification messages comprising the monitored information (as payload) to the server (step 706).

In this embodiment, the use limitation application may detect that that the user is interacting with the mobile device in order to unlock the screen or terminate the use limitation application. In that case, if the user somehow manages to unlock the screen, the use limitation application may directly re-lock the screen. In an embodiment, the relocking may include the use limitation application sending a code to the auxiliary device 6 to trigger the auxiliary device 6 to send a message comprising a key to lock the screen to the use limitation application as described in detail with reference to steps 512 and 514 of Fig. 5.

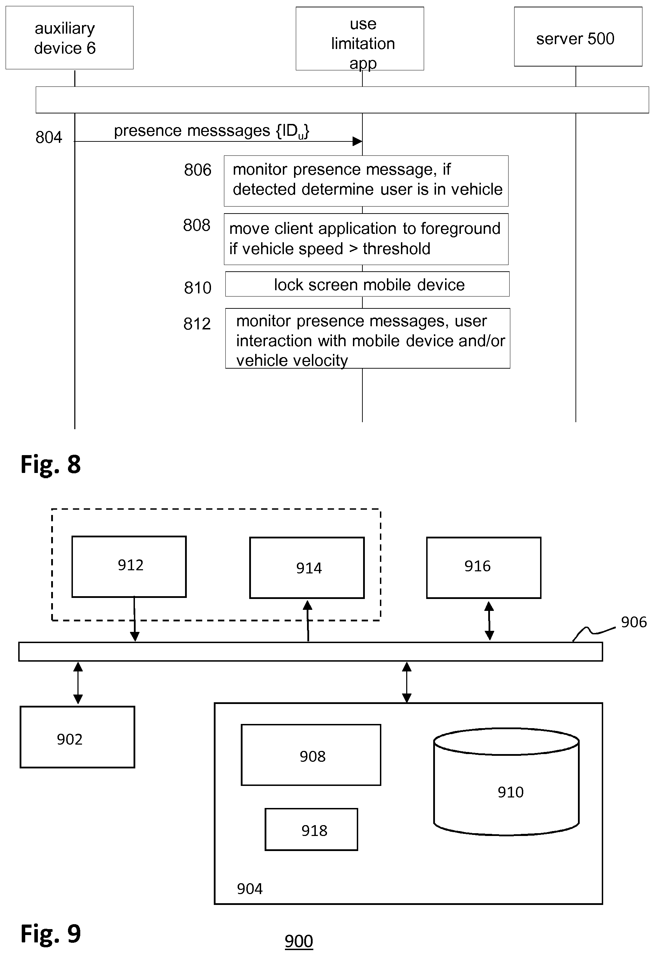

**Fig. 8** illustrates a flow chart of a method according to yet a further embodiment of the invention. In particular, Fig. 8 depicts part of a method wherein the use limitation application is receiving a presence message by an auxiliary device 6 that detects a surface vibration signal, i.e. that detects that the vehicle is moving, and wherein the use limitation application determines upon reception of the presence message that the user of mobile device comprising the use limitation application is in the vehicle. If the system detects a surface vibration signal, the use limitation application may, optionally in response to a message from auxiliary device 6 that has detected the surface vibration signal, change from a background process to a foreground process. The use limitation application as a foreground process may be configured so that the mobile device is locked, i.e. the user cannot access the user functions, as long as the use limitation application is a foreground process.

In one embodiment, the use limitation application may be configured to lock the mobile device by rendering a graphical overlay on top of the Graphical User Interface (GUI) of the mobile device. In an embodiment, the graphical overlay does not comprise functional areas that allow a user to interact with the GUI. This way, a user is prevented from interacting with the mobile device, e.g. to interact with applications running behind the graphical overlay. The graphical overlay may be presented even if the use limitation application runs in the background, for example because the user has pressed a "home button" of the mobile device. The graphical overlay prevents a user to access applications that are "behind" the graphical overlay. Hence, even if the use limitation application is running in the background, the user may still not be able to see other applications or notifications on the mobile device.

The graphical overlay may be configured such that a user is not able at all to interact with the graphical overlay, for example such that the overlay does not accept any input from a touch screen. Alternatively, the graphical overlay comprises an area with which a user indeed is able to interact. In an example the area is an emergency button in the overlay. A user interaction with this area on the display may result in the mobile device unlocking. This enables that a user, in case of an emergency, is able to unlock and use the mobile device. A user interaction with the area may be reported to the server by the mobile device.

Thereafter, the use limitation application may start monitoring information associated with the user detection device, the mobile device, the use limitation application and the vehicle in a similar way as described above.

If the system no longer detects the surface vibration signal, the use limitation application may be moved back to the background and access to the functions of the mobile device is again possible.

**Fig. 9** is a block diagram illustrating an exemplary data processing system that may be used as described in this disclosure. Data processing system 800 may include at least one processor 902 coupled to memory elements 904 through a system bus 906. As such, the data processing system may store program code within memory elements 904. Further, processor 902 may execute the program code accessed from memory elements 904 via system bus 906. In one aspect, data processing system may be implemented as a computer that is suitable for storing and/or executing program code. It should be appreciated, however, that data processing system 900 may be implemented in the form of any system including a processor and memory that is capable of performing the functions described within this specification.

It should be understood that data processing system 900 may represent processor 12 of the auxiliary device and/or auxiliary device and/or a processor of the mobile device and/or the mobile device.

Memory elements 904 may include one or more physical memory devices such as, for example, local memory 908 and one or more bulk storage devices 910. Local memory may refer to random access memory or other non-persistent memory device(s) generally used during actual execution of the program code. A bulk storage device may be implemented as a hard drive or other persistent data storage device. The processing system 900 may also include one or more cache memories (not shown) that provide temporary storage of at least some program code in order to reduce the number of times program code must be retrieved from bulk storage device 910 during execution.

Input/output (I/O) devices depicted as input device 912 and output device 914 optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter 916 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system 950.

As pictured in FIG. 9, memory elements 904 may store an application 918. It should be appreciated that data processing system 900 may further execute an operating system (not shown) that can facilitate execution of the application. Application, being implemented in the form of executable program code, can be executed by data processing system 900, e.g., by processor 902. Responsive to executing application, data processing system may be configured to perform one or more operations to be described herein in further detail.

In one aspect, for example, data processing system 900 may represent a client data processing system. In that case, application 918 may represent a use limitation application that, when executed, configures data processing system 900 to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application 918, when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A use limitation system for a mobile device in or on a vehicle, the system comprising a mobile device and an auxiliary device in the vehicle, wherein the mobile device and the auxiliary device are configured to connect automatically and the mobile device is configured to run a use limitation application, optionally in background mode, and wherein the system comprises at least one accelerometer providing at least one acceleration signal when using the vehicle, wherein the system is configured to:

   process the acceleration signal to detect a surface vibration signal caused by movement of the vehicle over a surface;
   limit functionality of the mobile device by the use limitation application in the mobile device only when the surface vibration signals are detected.

2. The system according to claim 1, wherein the auxiliary device comprises the at least one accelerometer and a processor for processing the acceleration signal and is configured to provide an input signal for the use limitation application of the mobile device.

3. The system according to claim 2, wherein:
   the system is configured to limit functionality of the mobile device by the auxiliary device transmitting an instruction to the mobile device to lock the screen or to switch the mobile device into an idle mode.

4. The system according to claim 3, wherein the instruction to lock the mobile device, preferably to lock the screen of the mobile device or to switch the mobile device into an idle mode, is based on the Human Interface Device protocol, preferably the instructions including a code for locking the screen or switch the mobile device into an idle mode.

5. The system according to one or more of the preceding claims, wherein the processing of the acceleration signal involves applying an amplitude threshold to detect the surface vibration signals.

6. The system according to one or more of the preceding claims, wherein the system is configured to sample acceleration at low frequency, e.g. less than 20 Hz, such as 15 Hz or 10 Hz.

7. The system according to claim 5 or 6, wherein the acceleration signal comprises a plurality of acceleration values and wherein the system is configured to process the acceleration signal by determining an amplitude acceleration value based on a summation of acceleration values or derivatives thereof and to detect the surface vibration signal on the basis of a comparison between the amplitude acceleration value and the amplitude threshold.

8. The system according to one or more of the preceding claims, wherein the processing of the acceleration signal comprises a frequency processing step of the acceleration signal, or a derivative thereof, to detect the surface vibration signals.

9. The system according to claim 8, wherein the frequency processing step comprises applying a frequency filter to detect the surface vibration signals.

10. The system according to one or more of the preceding claims, wherein the processing of the acceleration signal comprises a peak amplitude analysis step of the acceleration signal, or a derivative thereof, comprising comparing subsequent peak amplitudes to detect the surface vibration signal.

11. The system according to one or more of the preceding claims, wherein the auxiliary device is configured to wirelessly transmit, preferably repeatedly, one or more presence messages when the auxiliary device detects surface vibration signals and the presence message triggers the use limitation application to limit functionality of the mobile device, e.g. to lock the mobile device for preventing the user to access the mobile device.

12. The system according to one or more of the preceding claims, wherein the use limitation application is configured to repeatedly wirelessly transmit notification messages to a server in a network, the notification messages signaling the server that the use limitation application is operational in the mobile device;
monitor user interaction with the mobile device and transmitting information associated with the auxiliary device and/or the mobile device and/or the use limitation application being operational in the mobile device in the notification messages to the server; and,
receive a warning message from the server, if the server determines on the basis of the information in the notification messages an indication that the user is tampering with the mobile device.

13. An auxiliary device for use in the system according to one or more of the preceding claims.

14. A method for limiting use of a mobile device in or on a vehicle, the method comprising
determining at least one acceleration signal comprising an accelerometer repeatedly performing an acceleration measurement while the vehicle is moving over a surface;
processing the acceleration signal to detect a surface vibration signal caused by movement of the vehicle over the surface; and based on detecting the surface vibration signal,
limiting functionality of the mobile device.

15. A computer program comprising instructions to cause the auxiliary device of claim 13, the auxiliary device comprising an accelerometer, to execute the method according to claim 14.

**Fig. 1**

**Fig. 2**

EP 3 544 272 A1

Fig. 3

Fig. 4A

**Fig. 4B**

**Fig. 4C**

EP 3 544 272 A1

Fig. 5

auxiliary device 6 | mobile device 4 | server 500

602  request install client application →

604  ← download client application {ID$_c$, ID$_u$, user settings}

606  install application and configure to run the client application in the background upon startup

608  discover {ID$_u$}
     comfirm {ID$_u$}

610  comfirm installation {ID$_c$,ID$_u$} →  612

614

366  monitor presence message, if detected determine user is in vehicle

monitor notification messages, if no notification message received send alert message to client device

## Fig. 6

auxiliary device 6 | mobile device 4 | server 500

702  monitor presence messages, user interaction with mobile device and/or vehicle velocity

704  presence messsages {ID$_u$} →  notification messsages {ID$_c$, payload} →  706

706  detect unlock screen or termination client application

708  re-lock screen or restart client application

## Fig. 7

| auxiliary device 6 | use limitation app | server 500 |
|---|---|---|

804     presence messsages {ID$_u$}

| 806 | monitor presence message, if detected determine user is in vehicle |
|---|---|
| 808 | move client application to foreground if vehicle speed > threshold |
| 810 | lock screen mobile device |
| 812 | monitor presence messages, user interaction with mobile device and/or vehicle velocity |

**Fig. 8**

| 912 | 914 | 916 |
|---|---|---|

906

902

| 908 | 910 |
|---|---|
| 918 | |

904

**Fig. 9**          900

Europäisches
Patentamt

European
Patent Office

Office européen
des brevets

# EUROPEAN SEARCH REPORT

Application Number

EP 18 16 2964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 930 585 A1 (GOOGLE INC [US]) 14 October 2015 (2015-10-14) * abstract * * paragraphs [0010], [0011], [0017] - [0021], [0025], [0028] - [0030], [0035], [0036], [0052], [0053], [0069], [0113], [0133] * * figures 1,2,4,5 * | 1-15 | INV. H04M1/725 |
| X A | US 2011/021234 A1 (TIBBITTS SCOTT FERRILL [US] ET AL) 27 January 2011 (2011-01-27) * abstract * * paragraphs [0085], [0105], [0108], [0112] - [0114] * * claims 1,4 * * figures 1-10 * | 1,2, 13-15 3-12 | |
| X A | EP 2 814 229 A1 (BLACKBERRY LTD [CA]) 17 December 2014 (2014-12-17) * abstract * * paragraphs [0008], [0011], [0012], [0015], [0022] * * figures 1-5 * | 1,2, 13-15 3-12 | |

TECHNICAL FIELDS SEARCHED (IPC)

H04M
H04W

The present search report has been drawn up for all claims

| Place of search | Date of completion of the search | Examiner |
|---|---|---|
| Munich | 10 September 2018 | Pohl, Martin |

EPO FORM 1503 03.82 (P04C01)

## ANNEX TO THE EUROPEAN SEARCH REPORT
## ON EUROPEAN PATENT APPLICATION NO.

EP 18 16 2964

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2018

| Patent document cited in search report | | | Publication date | Patent family member(s) | | | Publication date |
|---|---|---|---|---|---|---|---|
| EP 2930585 | A1 | | 14-10-2015 | CN | 104978024 | A | 14-10-2015 |
| | | | | EP | 2930585 | A1 | 14-10-2015 |
| | | | | US | 9037125 | B1 | 19-05-2015 |
| | | | | US | 2015288804 | A1 | 08-10-2015 |
| | | | | US | 2017126880 | A1 | 04-05-2017 |
| | | | | US | 2018063319 | A1 | 01-03-2018 |
| | | | | US | 2018205819 | A1 | 19-07-2018 |
| US 2011021234 | A1 | | 27-01-2011 | US | 2011021234 | A1 | 27-01-2011 |
| | | | | US | 2012244883 | A1 | 27-09-2012 |
| | | | | US | 2014364108 | A1 | 11-12-2014 |
| | | | | US | 2016353355 | A1 | 01-12-2016 |
| | | | | WO | 2011011544 | A1 | 27-01-2011 |
| EP 2814229 | A1 | | 17-12-2014 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170310816 A